# EUROPÄISCHE PATENTSCHRIFT

(11) **EP 1 998 094 B1**
(45) Veröffentlichungstag und Bekanntmachung des Hinweises auf die Patenterteilung: **19.09.2018**
(21) Anmeldenummer: 07109411.4
(22) Anmeldetag: 01.06.2007
(51) Int. Cl.: F16K 41/04

(54) **Absperrarmatur für Medium-Leitungen**
Shut-off valve for medium pipes
Robinet d'arrêt pour conduites de transport de fluides

(43) Veröffentlichungstag der Anmeldung: 03.12.2008
(73) Patentinhaber: Hawle Armaturen GmbH, 83395 Freilassing (DE)
(72) Erfinder: Käfer, Manuela, 5310 Mondsee (AT)
(74) Vertreter: Schwabe - Sandmair - Marx

(56) Entgegenhaltungen:
- EP-A- 0 117 392
- WO-A-96/28680
- CH-A- 326 678
- DE-A1- 4 138 406
- DE-A1- 10 050 240
- DE-U1- 8 810 357

## Beschreibung

Die Erfindung betrifft eine Absperrarmatur für Gas- und Wasserleitungen zum Unterbrechen des Mediumstroms innerhalb der Leitung.

Die DE 100 50 240 A1 offenbart einen Absperrschieber für Druckrohrleitungen. Die Spindel des Absperrschiebers ist innerhalb einer einzigen Lagerung im oberen Gehäuseabschnitt des Absperrschiebers gelagert. Diese fest im Gehäuse angeordnete Lagerung wird beim Betätigen des Absperrschiebers durch Bedienpersonal durch axiale und radiale Kräfte beaufschlagt, welche die Lebensdauer der Lager verkürzen. Weiterhin fährt in der Öffnungsstellung des Absperrschiebers die Spindelmutter auf einen Gehäuseteil der Absperrarmatur auf. Dadurch wird das Gehäuse über die Spindelmutter mit Kräften beaufschlagt, wodurch auch die Lebensdauer des Gehäuses negativ beeinträchtigt wird.

Aus der WO 96/28680 ist eine Absperrarmatur mit einer mittels einer Lagerbuchse im Gehäuse gelagerten Spindel bekannt, wobei die Lagerbuchse in ihren Sitz im Gehäuse eingepresst ist.

Aus der DE 41 38 406 A1 ist eine Stopfbuchsendichtungspackung mit aktiven Dichtungsringen und einer Federeinrichtung aus passiven Stopfbuchsringen bekannt.

Die US 2,606,740 offenbart eine Absperrarmatur, bei welcher die Spindellagerung ebenfalls fest im Gehäuse fixiert ist und dadurch Kräfte beim Betätigen der Spindel von der Spindel über die Spindellagerung an das Gehäuse übertragen werden. Dadurch wird die Lebensdauer der Spindellagerung ebenfalls negativ beeinträchtigt.

Es ist die Aufgabe der vorliegenden Erfindung, die oben genannten Probleme des Standes der Technik zu überwinden.

Diese Aufgabe wird durch eine Absperrarmatur gemäß dem Anspruch 1 gelöst. Die Unteransprüche definieren dabei bevorzugte Ausführungsformen.

Die erfindungsgemäße Absperrarmatur umfasst ein Gehäuse, eine Spindel und eine Spindellagerung mit mindestens einer Lagerbuchse, wobei zwischen der mindestens einen Lagerbuchse und deren Sitz im Gehäuse eine Spielpassung ausgebildet ist. Mit anderen Worten lässt sich die mindestens eine Lagerbuchse in ihrem Sitz im Gehäuse ohne wesentlichen Kraftaufwand bewegen. Obwohl sich die Erfindung nicht auf den Einsatz einer einzigen Lagerbuchse beschränkt, soll sich die Beschreibung der Erfindung der Verständlichkeit halber im Folgenden auf eine Lagerbuchse beschränken.

Durch diese freie Beweglichkeit kann sichergestellt werden, dass für die Lebensdauer der Spindellagerung schädliche Belastungsfälle verhindert werden können, welche bei einer festen Einspannung der Lagerbuchse auftreten können.

Die in ihrem Sitz im Gehäuse sitzende Lagerbuchse dient als Anschlag für eine an einem Absperrorgan angeordnete Spindelmutter. Dieser Anschlag kann sowohl ein Anschlag für eine Öffnungsstellung als auch ein Anschlag für eine Schließstellung des Absperrorgan sein, auf welchen die Spindelmutter des Absperrorgans aufläuft. So läuft die Spindelmutter nicht direkt auf ein Gehäusebauteil auf, welches dadurch Schaden nehmen kann. Für den Fall einer Überbeanspruchung durch zu hohe aufgebrachte Kräfte beim Drehen der Spindel und der dadurch bewirkten Bewegung der Spindelmutter nach oben oder nach unten mit dem anschließenden Auflaufen auf den Anschlag kann das Gehäuse, welches nur schwer und kostenintensiv auszutauschen ist, nicht beschädigt werden. Bei Beschädigung der Buchse durch Überbeanspruchung kann diese im Gegensatz zum Gehäuse relativ leicht und kostengünstig ausgetauscht werden.

Dabei kann die Spielpassung der Buchse in ihrem Sitz im Gehäuse eine radiale Spielpassung sein, wobei die Buchse lose in ihren Sitz im Gehäuse eingelegt und in ihrem Sitz im Gehäuse um ihre Längsachse gedreht werden kann. Dabei kann die Spielpassung eine beliebige Spielpassung sein, so dass die Bewegungsfreiheit bzw. der Kraftaufwand beim Bewegen der Spindel in der Buchse durch eine entsprechende Passung von beispielsweise auf der Spindel aufgebrachten O-Ringen bestimmt werden kann.

In einer bevorzugten Ausführungsform läuft die Spindelmutter in der Öffnungsstellung des Absperrorgans auf eine an der Medium-Leitung abgewandten Seite der Spindel angeordnete Buchse auf.

Ferner kann sich die Spindel an ihrem der Medium-Leitung zugewandten Ende an einem Aufsitz abstützen. Dieser Aufsitz kann ebenfalls eine Lagerstelle sein und die axial auf die Spindel aufgebrachten Kräfte auffangen. Somit wird ein Verschieben der Spindel in zumindest einer Axialrichtung verhindert. Dazu kann die Spindel an ihrem einen Ende einen Absatz aufweisen, wobei sich der fortlaufende schmälere Teil der Spindel in den Aufsitz in Form einer Gleitlagerbuchse hinein erstrecken kann. Auch kann der Aufsitz als weiterer Anschlag für die Spindelmutter dienen, insbesondere als ein unter Anschlag für eine Schließstellung des Absperrorgans.

Weiterhin kann sich die Buchse beim Auflaufen der Spindelmutter auf die Buchse an einer Auskragung bzw. an einem Bund der Spindel abstützen, so dass die beim Auflaufen der Spindelmutter auf die Buchse verursachten Kräfte an die Spindel weitergegeben werden und dadurch umliegende Bauteile, insbesondere das Gehäuse nicht durch diese Kräfte beaufschlagt werden. Diese Auskragung bzw. dieser Bund der Spindel kann beispielsweise auch ein beliebiges, von der Spindel separates Bauteil sein, welches die Kräfte von der Buchse an die Spindel weiterleitet, beispielsweise eine auf die Spindel aufgeschraubte und gesicherte Mutter.

Die Buchse kann auf die Spindel aufgepresst sein, so dass ein Presssitz entsteht und dadurch eine ungewollte Positionsveränderung der Buchse an der Spindel verhindert wird. Dies kann alternativ oder zusätzlich auch durch ein oder mehrere Sicherungselemente bewerkstelligt werden, welche die Buchse an der Spindel insbesondere gegen axiale Verschiebung an der Spindel sichern. So kann die Buchse auch auf die Spindel aufgesteckt sein.

Weiterhin können zur Abdichtung der Absperrarmatur Dichtelemente gegen ungewolltes Austreten von Fluidum oder Gas aus der Leitung durch die Spindellagerung an der Buchse vorgesehen werden. Insbesondere können dabei O-Ringe zwischen der Buchse und deren Sitz im Gehäuse oder zwischen der Buchse und der Spindel oder eine Kombination daraus vorgesehen sein. Dabei können umlaufende Nuten in der Buchse und/oder in der Spindel diese Dichtelemente bzw. O-Ringe aufnehmen.

Ferner kann die Buchse aus jedem bekannten Buchsenmaterial bestehen, insbesondere aus einem Metall, im speziellen aus Messing.

Die vorliegende Erfindung birgt weiterhin den Vorteil, dass die Montage der Absperrarmatur, insbesondere die Montage der Spindel und der Spindellagerung in das Gehäuse einfacher gestaltet wird.

Auch wird durch die Spielpassung der Buchse in ihrem Sitz im Gehäuse ein besseres Kraftverhalten erreicht, da zum einen die Buchse nicht mehr durch axiale Betätigungskräfte an der Spindel beaufschlagt wird und zum anderen die Kraft beim Auflaufen der Spindelmutter auf die Buchse nicht mehr direkt an das Gehäuse weitergeleitet und durch dieses aufgefangen werden muss.

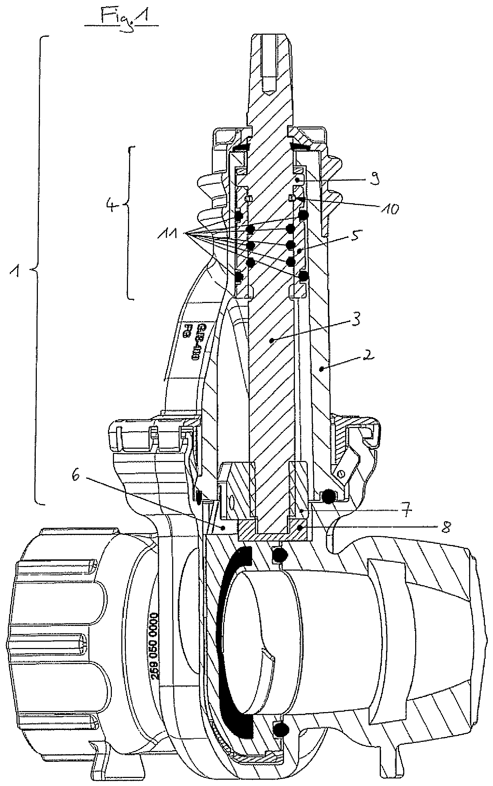

Die Erfindung wird im Weiteren anhand der beiliegenden Zeichnung näher erläutert. Sie kann hierin beschriebene Merkmale einzeln sowie in jedweder sinnvollen Kombination umfassen. Die Figur 1 zeigt eine Schnittansicht der erfindungsgemäßen Absperrarmatur auf einer Mediumleitung.

Diese Absperrarmatur 1 umfasst im Wesentlichen ein Gehäuse 2, eine Spindel 3 und in ihrem oberen Bereich eine Spindellagerung 4. Die Spindel ist in ihrem oberen Bereich in der Spindellagerung 4 und in ihrem unteren Bereich an einem Aufsitz 8 gelagert.

Durch Drehen der Spindel wird eine mit ihr über ein Gewinde verbundene Spindelmutter 7 je nach Drehrichtung nach oben oder nach unten bewegt. Ein mit der Spindelmutter 7 verbundenes Absperrorgan 6 bewegt sich dabei ebenfalls nach oben bzw. nach unten und öffnet bzw. schließt bei seiner Bewegung die unterhalb der Absperrarmatur 1 angeordnete Mediumleitung.

Der Aufsitz 8 bildet einen unteren Anschlag und die Lagerbuchse 5 einen oberen Anschlag für die Spindelmutter 7. Dadurch wird ein Weiterdrehen der Spindel 3 über die Öffnungs- oder die Schließstellung des Absperriorgans 6 verhindert.

Die Buchse 5 ist auf die Spindel 3 aufgesteckt und ist durch ein Sicherungselement 10 gegen axiale Verschiebung auf der Spindel 3 gesichert. Ferner ist oberhalb der Buchse ein umlaufender Kragen 9 auf der Spindel 3 ausgebildet. Wenn nun durch Drehen der Spindel 3 die Spindelmutter 7 soweit nach oben verschoben wird, dass sie auf die Buchse 5 aufläuft, so stützt sich die Buchse 5 am umlaufenden Bund 9 der Spindel 3 ab. Dadurch entsteht ein geschlossener Kraftfluss von der Spindelmutter 7 über die Buchse 5, den Bund 9 und die Spindel 3 wieder zurück auf die Spindelmutter 7. Dabei wird das Gehäuse 2 der Absperrarmatur 1 nicht durch diese Kräfte beaufschlagt und kann dadurch nicht beschädigt werden.

Auch ist zwischen der Buchse 5 und deren Sitz im Gehäuse 2 eine Spielpassung vorgesehen, so dass sich bei Drehung der Spindel 3 die auf die Spindel aufgesteckte Buchse 5 nicht mitdreht und somit eine Relativbewegung zwischen Buchse 5 und Spindel 3 stattfindet. Andererseits findet die Relativbewegung am unteren Ende der Spindel zwischen Aufsitz 8 und Spindel 3 statt. Durch diese Spielpassung wird eine Beaufschlagung der Buchse 5 durch Betätigungskräfte vom oberen Ende der Spindel 3 aus verhindert.

Ferner sind im Bereich der Buchse 5 mehrere Dichtelemente 11 angeordnet. Diese sitzen sowohl in umlaufenden Nuten in der Buchse 5 zur Abdichtung der Spielpassung zwischen Buchse 5 und Gehäuse 2 als auch in umlaufenden Nuten in der Spindel 3 zur Abdichtung der Spielpassung zwischen Spindel 3 und der Buchse 5. Dadurch wird ein Austreten des Mediums aus der unten liegenden Leitung über die Spindellagerung 4 verhindert.

Außerdem wird eine axiale Verschieblichkeit der Spindel 3 im Gehäuse 2 verhindert. Dabei wird die Verschiebung in Richtung der Mediumleitung durch den Aufsitz 8 verhindert und in umgekehrter Richtung durch den umlaufenden Bund 9, der sich über eine Scheibe am Gehäuse 2 abstützt.

Im von der Mediumleitung getrennten, also ausgebauten Zustand der Absperrarmatur 1 kann sich der Aufsitz 8 selbst nicht mehr an der Mediumleitung abstützen und die Spindel 3 kann samt der Buchse 5 aus dem Gehäuse 2 entfernt werden, was die Montage der Absperrarmatur vereinfacht.

## Patentansprüche

1. Absperrarmatur (1) für Medium-Leitungen mit einem Gehäuse (2), einer Spindel (3) und einer Spindellagerung (4) mit mindestens einer Lagerbuchse (5), wobei zwischen der mindestens einen Lagerbuchse (5) und deren Sitz im Gehäuse (2) eine Spielpassung ausgebildet ist, und wobei eine an einem Absperrorgan (6) angeordnete Spindelmutter (7) in einer Öffnungs- und/oder Schließstellung des Absperrorgans (6) auf eine der mindestens einen Lagerbuchse (5) der Spindellagerung (4) aufläuft.

2. Absperrarmatur nach Anspruch 1, **dadurch gekennzeichnet, dass** die Spielpassung der Lagerbuchse (5) in ihrem Sitz im Gehäuse (2) eine radiale Spielpassung ist.

3. Absperrarmatur nach Anspruch 1 oder 2, **dadurch gekennzeichnet, dass** die Spindelmutter (7) in der Öffnungsstellung des Absperrorgans (6) auf eine an der Medium-Leitung abgewandten Seite der Spindel (3) angeordnete Lagerbuchse (5) aufläuft.

4. Absperrarmatur nach einem der Ansprüche 1 bis 3, **dadurch gekennzeichnet, dass** sich die Spindel (3) an ihrem der Medium-Leitung zugewandten Ende an einem Aufsitz (8) abstützt.

5. Absperrarmatur nach einem der Ansprüche 1 bis 4, **dadurch gekennzeichnet, dass** sich die Lagerbuchse (5) beim Auflaufen der Spindelmutter (7) auf die Lagerbuchse (5) an einer Auskragung (9) an der Spindel (3), insbesondere an einem Bund der Spindel abstützt.

6. Absperrarmatur nach einem der Ansprüche 1 bis 5, **dadurch gekennzeichnet, dass** die Lagerbuchse (5) auf die Spindel (3) aufgesteckt wird und durch mindestens ein Sicherungselement (10) axial an der Spindel (3) gesichert ist.

7. Absperrarmatur nach einem der Ansprüche 1 bis 6, **dadurch gekennzeichnet, dass** zwischen Lagerbuchse (5) und deren Sitz im Gehäuse (2) und/oder zwischen Lagerbuchse (5) und Spindel (3) mindestens ein Dichtelement (11) angeordnet ist, insbesondere in Form eines O-Ringes.

8. Absperrarmatur nach einem der Ansprüche 1 bis 7, **dadurch gekennzeichnet, dass** die Lagerbuchse (5) im Wesentlichen aus Metall, insbesondere aus Messing besteht.

## Claims

1. Shut-off valve (1) for medium lines having a housing (2), a spindle (3) and a spindle bearing (4) having at least one bearing bushing (5), wherein a clearance fit is formed between the at least one bearing bushing (5) and its seat in the housing (2), and wherein a spindle nut (7) arranged on a shut-off organ (6) runs onto one of the at least one bearing bushing (5) of the spindle bearing (4) in an open and/or closed position of the shut-off organ (6).

2. Shut-off valve according to claim 1, **characterised in that** the clearance fit of the bearing bushing (5) in its seat in the housing (2) is a radial clearance fit.

3. Shut-off valve according to claim 1 or 2, **characterised in that** in the open position (6) of the shut-off organ (6), the spindle nut (7) runs onto a bearing bushing (5) arranged on the side of the spindle (3) facing away from the medium line.

4. Shut-off valve according to one of claims 1 to 3, **characterised in that** the spindle (3) is supported on a mount (8) on its end facing towards the medium line.

5. Shut-off valve according to one of claims 1 to 4, **characterised in that** the bearing bushing (5) is supported on a projection (9) on the spindle (3), in particular on a collar of the spindle, when the spindle nut (7) runs onto the bearing bushing (5).

6. Shut-off valve according to one of claims 1 to 5, **characterised in that** the bearing bushing (5) is plugged onto the spindle (3) and is secured axially on the spindle (3) by at least one securing element (10).

7. Shut-off valve according to one of claims 1 to 6, **characterised in that** at least one sealing element (11) is arranged between the bearing bushing (5) and its seat in the housing (2) and/or between the bearing bushing (5) and the spindle (3), in particular in the form of an O-ring.

8. Shut-off valve according to one of claims 1 to 7, **characterised in that** the bearing bushing (5) consists substantially of metal, in particular of brass.

## Revendications

1. Robinet d'arrêt (1) pour conduites de fluide comportant un boîtier (2), une broche (3) et un logement de broche (4) comprenant au moins une douille de palier (5), un ajustement avec jeu étant formé entre l'au moins une douille de palier (5) et son siège dans le boîtier (2), et un écrou de broche (7) disposé sur un organe d'arrêt (6) passant dans une position d'ouverture et/ou de fermeture de l'organe d'arrêt (6) sur une de l'au moins une douille de palier (5) du logement de broche (4).

2. Robinet d'arrêt selon la revendication 1, **caractérisé en ce que** l'ajustement avec jeu de la douille de palier (5) constitue dans son siège dans le boîtier (2) un ajustement radial avec jeu.

3. Robinet d'arrêt selon la revendication 1 ou 2, **caractérisé en ce que** l'écrou de broche (7) dans la position d'ouverture de l'organe d'arrêt (6) passe sur une douille de palier (5) située sur un côté de la broche (3) opposé à la conduite de fluide.

4. Robinet d'arrêt selon l'une des revendications 1 à 3, **caractérisé en ce que** la broche (3) sur son extrémité tournée vers la conduite de fluide prend appui sur un siège (8).

5. Robinet d'arrêt selon l'une des revendications 1 à 4, **caractérisé en ce que** la douille de palier (5), lors du passage de l'écrou de broche (7) sur la douille de palier (5), prend appui sur une saillie (9) sur la broche (3), en particulier sur un collet de la broche.

6. Robinet d'arrêt selon l'une des revendications 1 à 5, **caractérisé en ce que** la douille de palier (5) est emboîtée sur la broche (3) et est fixée axialement à la broche (3) par au moins un élément de fixation (10).

7. Robinet d'arrêt selon l'une des revendications 1 à 6, **caractérisé en ce qu'**au moins un élément d'étanchéité (11), en particulier sous forme d'un joint torique, est disposé entre la douille de palier (5) et son siège dans le boîtier (2) et/ou entre la douille de palier (5) et la broche (3).

8. Robinet d'arrêt selon l'une des revendications 1 à 7, **caractérisé en ce que** la douille de palier (5) est constituée essentiellement de métal, en particulier de laiton.
